# EUROPEAN PATENT SPECIFICATION

(11) **EP 2 237 481 B1**
(45) Date of publication and mention of the grant of the patent: **04.12.2013**
(21) Application number: 08870903.5
(22) Date of filing: 25.12.2008
(51) Int. Cl.: H04L 12/24, H04L 29/06

(54) **A PROVIDING METHOD, AN ACQUIRING METHOD, A SYSTEM AND DEVICE OF THE RESOURCE EXPIRY INFORMATION**
BEREITSTELLUNGSVERFAHREN, ERFASSUNGSVERFAHREN, SYSTEM UND VORRICHTUNG DER RESSOURCENABLAUFINFORMATIONEN
PROCÉDÉ DE FOURNITURE, PROCÉDÉ D'ACQUISITION, SYSTÈME ET DISPOSITIF D'INFORMATIONS D'EXPIRATION DE RESSOURCES

(30) Priority: 28.12.2007 CN 200710305679
(43) Date of publication of application: 06.10.2010
(73) Proprietor: Huawei Technologies Co., Ltd., Longgang District, Shenzhen Guangdong 518129 (CN)
(72) Inventor: LIN, Yangbo, Guangdong 518129 (CN)
(74) Representative: Epping - Hermann - Fischer
(86) International application number: PCT/CN2008/073719
(87) International publication number: WO 2009/089724

(56) References cited:
- EP-A1- 1 333 695
- WO-A1-01/78331
- CN-A- 1 984 128
- "Gateway control protocol: Inactivity timer package; H.248.14 (03/02)", ITU-T STANDARD IN FORCE (I), INTERNATIONAL TELECOMMUNICATION UNION, GENEVA, CH, no. H.248.14 (03/02), 29 March 2002 (2002-03-29), XP017401377,
- RFC4097 ''MIDDLEBOX COMMUNICATIONS (MIDCOM) PROTOCOL EVALUATION 30 June 2005,
- RFC2085 ''MEDIA GATEWAY CONTROL PROTOCOL ARCHITECTURE AND REQUIREMENTS 30 April 2000,

## Description

### FIELD OF THE TECHNOLOGY

The present invention relates to the field of network technology, and more particularly to a method for providing expiry information of a resource, a method for acquiring expiry information of a resource, a media gateway controller, a media gateway, and a system for acquiring expiry information of a resource.

### BACKGROUND OF THE INVENTION

A Media Gateway Controller (MGC) and a Media Gateway (MG) are two key components of a packet network in an architecture where the service is separated from the bearer. The MGC is responsible for service control while the MG is responsible for media bearing, thereby achieving separation of a service control plane and a media bearing plane. In this way, network resources can be shared fully, device upgrading and service expansion can be simplified, and the development and maintenance cost can be reduced dramatically.

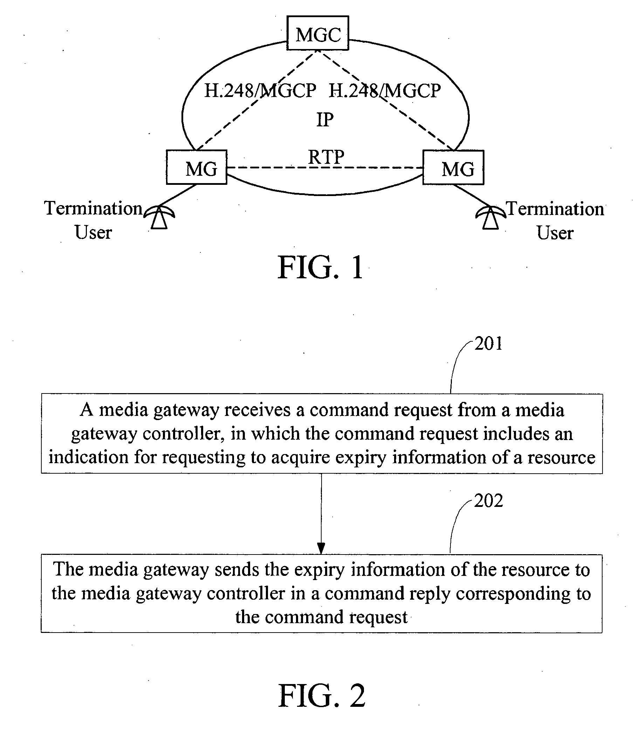

FIG. 1 is a schematic view of the connection relationship between the MG, the MGC and terminations. The media gateway control protocol is a main protocol for communication between the MG and the MGC. The currently prevalent protocols include H.248/Gateway Control Protocol (MeGaCo) and Media Gateway Control Protocol (MGCP). The H.248/MeGaCo protocol is developed based on the MGCP protocol. MGCP version 1 was developed by the Internet Engineering Task Force (IETF) in October, 1999 and was amended in January, 2003. H.248/MeGaCo version 1 was developed by the IETF and the International Telecommunications Union (ITU) together in November, 2000 and was amended in June, 2003. H.248 version 2 was developed by the ITU in May, 2002 and was amended in March, 2004. H.248 version 3 was developed by the ITU in September, 2005.

Taking H.248 as an example, various resources on the MG are abstracted as terminations. Terminations are categorized into physical terminations and ephemeral terminations. The former represents some physical entities having semi-permanent existence, such as a time division multiplex (TDM) timeslot, and the latter represents some public resources that are applied for temporarily and will be released after use, such as a Real-time Transport Protocol (RTP) stream. Further, a special termination called root termination represents the entire MG. The association between terminations is abstracted as a context. The context may include a plurality of terminations. Therefore, a topology is used to describe the association between terminations. A termination having not been associated with another termination yet is contained in a special context known as Null Context.

On the basis of the abstract connection model, the interaction between a service and a bearer actually is an operation performed on terminations and the context. Such operation is implemented through a command request and a reply between the MGC and the MG. The command type includes Add, Modify, Subtract, Move, AuditValue, AuditCapabilities, Notify and ServiceChange. The command parameters, also referred to as descriptors, are categorized into Property, Signal, Event, Statistic, and so on. For convenience, the parameters associated with service are logically aggregated as a Package.

The control of the MGC over the MG may be directed to a termination or a stream on a termination. A TerminationState descriptor includes non-exclusive characteristics of a stream on a termination, such as ServiceState and EventBufferControl. A Media descriptor includes exclusive characteristics of a stream on a termination, which include a series of Stream descriptors. Each Stream descriptor is directed to a single stream, and further includes a LocalControl descriptor, a Local descriptor and a Remote descriptor. The LocalControl descriptor includes control information related to a stream, such as Mode, ReserveGroup, and ReserveValue. The Local descriptor and the Remote descriptor respectively include characteristics of receiving a stream by a local end and a remote end, such as addresses and ports and encoding/decoding algorithms, and are in the form of the Session Description Protocol (SDP).

In the prior art, when a user requests a media gateway controller for certain media service, such as playing a media, the media gateway controller needs to instruct the media gateway to allocate a corresponding media resource. At the same time, the user may also need to obtain the description information of the media service, such as the allocated media resource, so as to properly use and control the provided media service. In the process for transferring the description information about the media and the media stream forming the media to users, the description information and the media stream will pass through some network entities. The intermediate network entities as well as user terminations may have the cache function. However, predetermined or dynamic changes may occur to the media description information and the media stream with time, for example, some lower layer transmission information may change. Therefore, the media description information and the media stream previously transferred might become old. If the intermediate network entities as well as the user terminations through which the media description information and the media stream are transferred know the media description information and the information about when the media stream expires, it will be helpful for them to determine and discard old or even invalid content. Because relevant media resources are on the media gateway, while the media gateway controller might have no idea of the expiry information of the media resources, it is necessary to provide a corresponding support mechanism.

The prior art has at least the following problem: Since the relevant media resources are on the media gateway, the expiry information of the relevant resources cannot be provided to the media gateway controller.

Document D1 (EP1333695A1) relates to a system for use in a wireless telecommunications network. In particular, D1 discloses that the context manager 32 set the period of time of resource reserved and MGW sends a message to the MSC server when there is no resource reserved in the MSC.

Document D2 (WO 01/78331 A2) relates to a method for handing a connection in a communication system comprising a gateway system. In particular, D2 discloses a gateway controller request a gateway to reserve resource, and the media gateway controller detects time-out of timer expiry of the time interval T1 and refresh the connections of the media gateway 2 wherein the T1 is set in the media gateway controller.

### SUMMARY OF THE INVENTION

In view of this, embodiments of the present invention is directed to a method for providing and a method for acquiring expiry information of a resource, a system for acquiring expiry information of a resource, a media gateway, and a media gateway controller, so as to acquire the expiry information of the resource.

In order to solve the problem, in an embodiment, the present invention provides a method for providing expiry information of a resource, which includes:
receiving at a media gateway a command request sent by a media gateway controller, in which the command request carries an indication for requesting to acquire the expiry information of the resource; and
sending by the media gateway the expiry information of the resource to the media gateway controller in a command reply corresponding to the command request.

In an embodiment, the present invention provides a media gateway, which includes:
a request information receiving unit, adapted to receive a command request from a media gateway controller, in which the command request carries an indication for requesting to acquire the expiry information of the resource; and
an expiry information sending unit, adapted to send a command reply corresponding to the command request to the media gateway controller, in which the command reply includes the expiry information of the resource.

In an embodiment, the present invention provides a method for acquiring expiry information of a resource, which includes:
sending by a media gateway controller a command request to a media gateway, in which the command request carries an indication for requesting to acquire the expiry information of the resource; and
receiving at the media gateway controller, a command reply corresponding to the command request sent by the media gateway, in which the command reply carries the expiry information of the resource.

In an embodiment, the present invention provides a media gateway controller, which includes:
a request information sending unit, adapted to send a command request to a media gateway, in which the command request carries an indication for requesting to acquire the expiry information of the resource; and
an expiry information receiving unit, adapted to receive a command reply corresponding to the command request from the media gateway, in which the command reply carries the expiry information of the resource.

In an embodiment, the present invention provides a system for acquiring expiry information of a resource, which includes: a media gateway and a media gateway controller,
the media gateway controller is adapted to send a command request carrying an indication for requesting to acquire the expiry information of the resource to the media gateway, and receive a command reply corresponding to the command request sent by the media gateway; and
the media gateway is adapted to receive the command request carrying the indication for requesting to acquire the expiry information of the resource sent by the media gateway controller, and send the command reply corresponding to the command request and carrying the expiry information of the resource to the media gateway controller.

Compared with the prior art, the embodiments of the present invention have the following advantages.

After the resource is operated according to the command request received from the media gateway controller on the media gateway, the expiry information of the resource is sent to the media gateway controller through a corresponding command reply. Thus, the media gateway controller may acquire the expiry information of the media resource allocated or adjusted by the media gateway for providing a media service, and further inform the intermediate network entities and the user terminations involved in media transfer, which is helpful for them to determine and discard old or even invalid media description information and media stream, and also to determine the expiry information of a specific media resource or the resource corresponding to specific expiry information. Therefore, the expiry information of the resource can be acquired conveniently and practically.

### BRIEF DESCRIPTION OF THE DRAWINGS

Figure 1 is a schematic view of the connection relationship between the media gateway, the media gateway controller and terminations in the prior art;
Figure 2 is a flow chart of a method for acquiring expiry information of a resource according to a first embodiment of the present invention;
Figure 3 is a flow chart of a method for acquiring expiry information of a resource according to a second embodiment of the present invention;
Figure 4 is a block diagram of the structure of a media gateway for acquiring expiry information of a resource according to an embodiment of the present invention; and
Figure 5 is a block diagram of the structure of a media gateway controller of acquiring expiry information of a resource according to an embodiment of the present invention.

### DETAILED DESCRIPTION OF THE EMBODIMENTS

The present invention is hereinafter described in detail with reference to embodiments and accompanying drawings.

FIG. 2 is a flow chart of a method according to a first embodiment of the present invention. As shown in FIG. 2, the method includes the following steps.

In Step S201, a media gateway receives a command request from a media gateway controller, in which the command request includes an indication for requesting to acquire expiry information of a resource. The resources in the embodiments of the present invention include, but are not limited to, a media resource, and may also include other resources.

In Step S202, the media gateway sends the expiry information of the resource to the media gateway controller in a command reply corresponding to the command request.

The embodiments of the present invention provide convenient and efficient solutions for indicating the media resource expiry. After the media gateway receives a command request carrying the indication for requesting to acquire the expiry information of the resource and requesting for operating on the resource from the media gateway controller, the media gateway sends the expiry information of the resource to the media gateway controller in the command reply corresponding to the command request. In this way, the media gateway controller may acquire the expiry information of the media resource allocated by the media gateway for providing a media service, and further inform to intermediate network entities and user terminations involved in the media transfer, which is helpful for them to determine and discard old or even invalid media description information and media stream.

In the above embodiment, the resource is a termination or a stream.

In the above embodiment, if the command request includes identification information of the resource, the media gateway sends the expiry information of the resource to the media gateway controller in the command reply corresponding to the command request as follows.

The media gateway sends the expiry information of the resource associated with the identification information to the media gateway controller.

In the above embodiment, if the command request does not include identification information of the resource, the media gateway sends the expiry information of the resource to the media gateway controller in the command reply corresponding to the command request as follows.

The media gateway sends the expiry information of the resource having the expiry information with a date and time to be reached earliest in all resources to the media gateway controller. For a termination or a stream, the resource may be further categorized into a set including multiple segments. Each segment of the set may represent one resource, which accordingly also has the corresponding expiry information. For the multiple segments in a termination or a stream, there may be multiple pieces of expiry information as well. In the set including multiple segments, if one segment expires, the entire set will expire. Hence, by sending the expiry information of the resource having the expiry information with a data and time to be reached earliest in all the resource to the media gateway controller, the information of the resource to become invalid can be fed back to the media gateway controller accurately.

Alternatively, in the above embodiment, if the command request does not include identification information of the resource, the method may further include: the media gateway returning corresponding error information to the media gateway controller.

In the above embodiment, the expiry information of the resource includes the date and time.

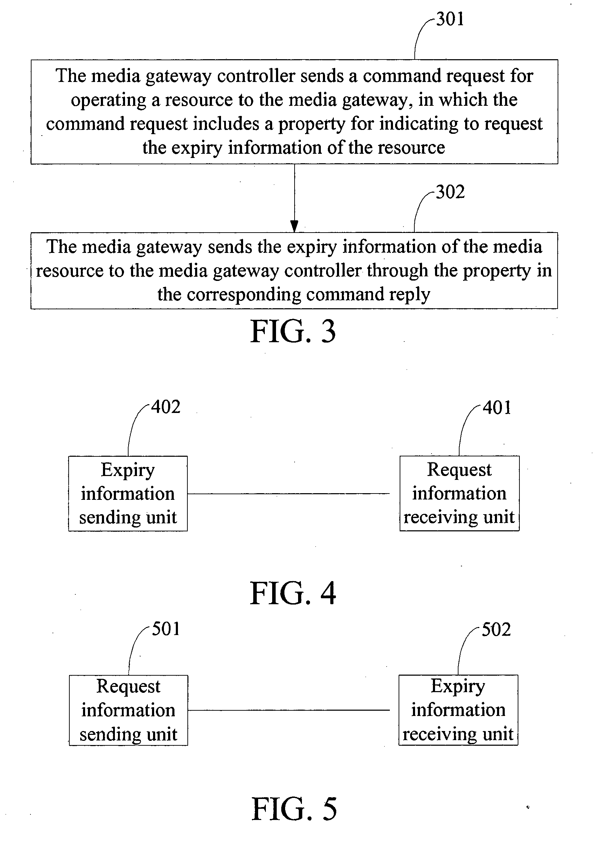

On the basis of the first embodiment, a preferred solution of the present invention is illustrated in more detail by taking a second embodiment as an example. FIG. 3 is a flow chart of a method according to a second embodiment of the present invention. As shown in FIG. 3, the method includes the following steps.

One property is defined in an existing or new package of the media gateway control protocols (including H.248 and MGCP), and the expiry information of the media resource is represented through the property. The expiry information of the media resource may include, but is not limited to, date and time. For example, in the case that the property is defined through a new package, the new package may be named "media resource expiry (mre) package", and the property name is "date and time (dt)", which is used in the format of "mre/dt". Similarly, the definition of the property also may be added in the existing package, and the name and the use format are defined accordingly. Persons skilled in the art may easily obtain other definition manners according to the definition manners. Therefore, the variation to the definition manners is also covered by the protection scope of the present invention.

The data type of the property may be a string, which adopts absolute date and time, such as "Fri, 08 Aug 2008 8:00:00 GMT" represented according to Greenwich standard time (GMT). Definitely, persons skilled in the art also may adopt other manners to represent the data type, date and time, and also may adopt other manners which do not influence the recognition and application, which are not limited in this embodiment.

The property may be applied to a termination or a stream on a termination. If applied to a termination, the property is defined in a TerminationState descriptor. If applied to a stream, the property is defined in a LocalControl descriptor.

The property may be, but is not limited to, read-only. That is, the property is set by the media gateway, and the media gateway controller obtains the expiry information of the corresponding media resource only through the property.

In Step S301, the media gateway controller sends a command request for operating a resource to the media gateway. The command request includes a property for indicating to request the expiry information of the resource.

The command request sent by the media gateway controller may be an Add, Modify, or Move command request for allocating or adjusting a resource. At the same time, the property is attached, and a value of the property is a wildcard "$" representing "choose", so as to indicate that the media gateway controller intends to acquire the expiry information of the media resource allocated or adjusted by the media gateway. Definitely, other manners may also be utilized to indicate that the media gateway controller intends to acquire the expiry information of the media resource allocated or adjusted by the media gateway.

The command request sent by the media gateway controller may also be an AuditValue command request for auditing the property, which also includes auditing of the identification information of the media resource simultaneously, so the command request definitely may also be applied to audit the identification information of the media resource. In one manner for acquiring the resource information, a command may be used to directly allocate or adjust the resource; of course, another manner for acquiring the resource information is the AuditValue command, which is used to directly acquire the resource information without any operation such as allocation and adjustment on the resource. The information of the relevant resource may be obtained through the above two manners.

In Step S302, the media gateway sends the expiry information of the media resource to the media gateway controller through the property in the corresponding command reply.

Two solutions may further be implemented as the preferred solutions of the above embodiment.

Firstly, when the media gateway controller applies the property with respect to a termination (that is, included in the TerminationState descriptor) in the command request, the media gateway will feed back the expiry date and time to be reached earliest in all relevant media resources on the termination in the command reply. When the media gateway controller applies the property with respect to a stream (that is, included in the LocalControl descriptor) in the command request, the media gateway will feed back the expiry date and time to be reached earliest in all relevant media resources on the stream in the command reply. When the media gateway controller needs to obtain the expiry date and time of a specific media resource on a termination or a stream, the media gateway controller may indicate the identification information of the media resource to the media gateway in the command request, and the media gateway will feed back the expiry date and time of the resource associated with the identification information of the resource on the termination or the stream in the command reply.

Secondly, the media gateway controller indicates identification information of the media resource having the expiry date and time that needs to be obtained to the media gateway in the command request. The media gateway will feed back the expiry date and time of the resource associated with the identification information of the resource on the termination or stream in the command reply. Otherwise, the media gateway will feed back the corresponding error information, such as error code 473 representing lack of needed information.

When the command request is an Add, Modify, or Move command request for allocating or adjusting the resource, the media gateway feeds back the expiry information of the resource in the command reply. When the command request is an AuditValue command request for auditing, the media gateway feeds back the expiry information of the resource in the command reply, and at the same time, identifies the resource through the identification information of the resource.

For example, when delivering a Modify command for requesting the media gateway to add a stream for a certain termination, the media gateway controller includes mre/dt=$ in the LocalControl descriptor. After the media gateway receives the command from the media gateway controller, the media gateway allocates the relevant media resource for the stream. Next, the LocalControl descriptor of the corresponding command reply including mre/dt="Fri, 08 Aug 2008 8:00:00 GMT" is fed back to the media gateway controller, to indicate the date and time when the stream description expires in the stream and the Local descriptor. In this example, the expiry date and time are Greenwich standard time 8 o'clock on August 8, 2008.

The embodiments of the present invention provide convenient and efficient solutions for indicating the media resource expiry. After the media gateway operates the resource according to the command request received from the media gateway controller, the resource expiry information is fed back to the media gateway controller. In this way, the media gateway controller may acquire the expiry information of the media resource allocated or adjusted by the media gateway for providing media service, and further inform the intermediate network entities and the user terminations involved in the media transfer, which is helpful for them to determine and discard the old or even invalid media description information and the media stream, and also to determine the expiry information of a specific media resource or the resource corresponding to specific expiry information.

FIG. 4 is a block diagram of a media gateway for acquiring expiry information of a resource according to a first embodiment of the present invention. As shown in FIG. 4, the media gateway includes:
a request information receiving unit 401, adapted to receive a command request from a media gateway controller, in which the command request carries an indication for requesting to acquire the expiry information of a resource; and
an expiry information sending unit 402, adapted to send the expiry information of the resource to the media gateway controller in a command reply corresponding to the command request.

In the above embodiment, the resource is a termination or a stream.

FIG. 5 is a block diagram of a media gateway controller for acquiring expiry information of a resource according to a first embodiment of the present invention. As shown in FIG. 5, the media gateway controller includes:
a request information sending unit 501, adapted to send a command request to a media gateway, in which the command request carries an indication for requesting to acquire the expiry information of a resource; and
an expiry information receiving unit 502, adapted to receive a command reply corresponding to the command request from the media gateway, in which the command reply carries the expiry information of the resource.

In the above embodiment, the resource is a termination or a stream.

In an embodiment, the present invention further provides a system of acquiring expiry information of resource, which includes a media gateway and a media gateway controller. The media gateway controller is adapted to send a command request carrying an indication for requesting to acquire the expiry information of a resource to the media gateway, and receive a command reply corresponding to the command request sent by the media gateway; the media gateway is adapted to receive the command request carrying the indication for requesting to acquire the expiry information of the resource sent by the media gateway controller, and send the command reply corresponding to the command request and carrying the expiry information of the resource to the media gateway controller.

The specific implementing process of the media gateway and the media gateway controller in this embodiment is described in detail in the foregoing, and will not be described again here.

Through the descriptions of the preceding embodiments, those skilled in the art may understand that the present invention may be implemented by hardware only or by software and a necessary universal hardware platform. However, in most cases, using software and a necessary universal hardware platform is preferred. Based on such understandings, all or part of the technical solution under the present invention that makes contributions to the prior art may be essentially embodied in the form of a software product. The software product may be stored in a computer readable storage medium, such as a hard disk, a Compact Disk Read-Only Memory (CD-ROM) and a floppy disk. The software product includes a number of instructions that enable a computer device (personal computer, server, or network device) to execute the method provided in each embodiment of the present invention.

## Claims

1. A method for providing expiry information of a resource, comprising:
receiving at a media gateway, a command request sent by a media gateway controller, wherein the command request carries an indication for requesting to acquire the expiry information of the resource; and
sending by the media gateway, the expiry information of the resource to the media gateway controller in a command reply corresponding to the command request.

2. The method for providing expiry information of a resource according to claim 1, wherein,
the resource is a termination or a stream.

3. The method for providing expiry information of a resource according to claim 1, wherein,
if the command request comprises identification information of the resource, the sending the expiry information of the resource to the media gateway controller comprises:
sending the expiry information of the resource associated with the identification information to the media gateway controller.

4. The method for providing expiry information of a resource according to claim 1, wherein,
if the command request does not comprise identification information of the resource, the sending the expiry information of the resource to the media gateway controller comprises:
sending the expiry information of the resource having the expiry information with a date and time to be reached earliest in all resources to the media gateway controller.

5. The method for providing expiry information of a resource according to claim 1, wherein if the command request does not comprise identification information of the resource, the method further comprises:
returning corresponding error information to the media gateway controller.

6. The method for providing expiry information of a resource according to claim 1, wherein the command request comprises an Add command, a Modify command or a Move command, the Add command, the Modify command or the Move command comprises a property representing the expiry information of the resource, a value of the property is a wildcard representing "choose", and the property indicates requesting the expiry information of the resource.

7. The method for providing expiry information of a resource according to claim 6, wherein the command reply comprises a property representing the expiry information of the resource, and a value of the property is the expiry information of the resource.

8. The method for providing expiry information of a resource according to claim 1, wherein the command request comprises an AuditValue command, and the AuditValue command is adapted to audit a property of the expiry information of the resource and corresponding identification information of the resource.

9. The method for providing expiry information of a resource according to claim 8, wherein the command reply comprises a property of the expiry information of the resource and identification information of the resource, a value of the property is the expiry information of the resource, and the identification information is adapted to identify the resource.

10. The method for providing expiry information of a resource according to any of claims 1 to 9, wherein,
the expiry information of the resource comprises a date and time.

11. A media gateway, comprising:
a request information receiving unit (401), adapted to receive a command request from a media gateway controller, wherein the command request carries an indication for requesting to acquire expiry information of a resource; and
an expiry information sending unit (402), adapted to send a command reply corresponding to the command request to the media gateway controller, wherein the command reply comprises the expiry information of the resource and is sent to the media gateway controller.

12. The media gateway according to claim 11, wherein,
the command request received by the request information receiving unit (401) further comprises identification information of the resource; and
the command reply sent by the expiry information sending unit (402) comprises the expiry information of the resource associated with the identification information.

13. The media gateway according to claim 11, wherein,
the command request received by the request information receiving unit (401) does not comprise identification information of the resource; and
the command reply sent by the expiry information sending unit (402) comprises the expiry information of the resource having the expiry information with a data and time to be reached earliest in all resources.

14. The media gateway sending the expiry information of the resource according to claim 11, wherein,
the command request received by the request information receiving unit (401) does not comprise identification information of the resource; and
the expiry information sending unit (402) is further adapted to return corresponding error information to the media gateway controller.

15. A method for acquiring expiry information of a resource, comprising:
sending by a media gateway controller, a command request to a media gateway, wherein the command request carries an indication for requesting to acquire the expiry information of the resource; and
receiving at the media gateway controller, a command reply corresponding to the command request sent by the media gateway, wherein the command reply carries the expiry information of the resource.

16. A media gateway controller, comprising:
a request information sending unit (501), adapted to send a command request to a media gateway, wherein the command request carries an indication for requesting to acquire expiry information of a resource; and
an expiry information receiving unit (502), adapted to receive a command reply corresponding to the command request from the media gateway, wherein the command reply carries the expiry information of the resource.

## Patentansprüche

1. Verfahren zum Bereitstellen von Verfallsinformationen eines Betriebsmittels, umfassend:
Empfangen einer durch einen "Media Gateway Controller" gesendeten Befehlsanforderung in einem "Media Gateway", wobei die Befehlsanforderung eine Angabe zum Anfordern, die Verfallsinformationen des Betriebsmittels zu beschaffen, führt; und
Senden der Verfallsinformationen des Betriebsmittels durch das "Media Gateway" zu dem "Media Gateway Controller" in einer Befehlsantwort, die der Befehlsanforderung entspricht.

2. Verfahren zum Bereitstellen von Verfallsinformationen eines Betriebsmittels nach Anspruch 1, wobei
das Betriebsmittel ein Abschluss oder ein Stream ist.

3. Verfahren zum Bereitstellen von Verfallsinformationen eines Betriebsmittels nach Anspruch 1, wobei
wenn die Befehlsanforderung Identifikationsinformationen des Betriebsmittels umfasst, das Senden der Verfallsinformationen des Betriebsmittels zu dem "Media Gateway Controller" Folgendes umfasst:
Senden der Verfallsinformationen des Betriebsmittels, das mit den Identifikationsinformationen assoziiert ist, zu dem "Media Gateway Controller".

4. Verfahren zum Bereitstellen von Verfallsinformationen eines Betriebsmittels nach Anspruch 1, wobei
wenn die Befehlsanforderung nicht Identifikationsinformationen des Betriebsmittels umfasst, das Senden der Verfallsinformationen des Betriebsmittels zu dem "Media Gateway Controller" Folgendes umfasst:
Senden der Verfallsinformationen des Betriebsmittels, das die Verfallsinformationen mit einem Datum und einer Uhrzeit aufweist, die in allen Betriebsmitteln am frühesten zu erreichen sind, zu dem "Media Gateway Controller".

5. Verfahren zum Bereitstellen von Verfallsinformationen eines Betriebsmittels nach Anspruch 1, wobei
wenn die Befehlsanforderung nicht Identifikationsinformationen des Betriebsmittels umfasst, das Verfahren ferner Folgendes umfasst:
Zurückgeben von entsprechenden Fehlerinformationen an den "Media Gateway Controller".

6. Verfahren zum Bereitstellen von Verfallsinformationen eines Betriebsmittels nach Anspruch 1, wobei die Befehlsanforderung einen "Add"-Befehl, einen "Modify"-Befehl oder einen "Move"-Befehl umfasst, der "Add"-Befehl, der "Modify"-Befehl oder der "Move"-Befehl eine Eigenschaft umfasst, die die Verfallsinformationen des Betriebsmittels repräsentiert, ein Wert der Eigenschaft eine Wildcard ist, die "Wählen" repräsentiert, und die Eigenschaft das Anfordern der Verfallsinformationen des Betriebsmittels angibt.

7. Verfahren zum Bereitstellen von Verfallsinformationen eines Betriebsmittels nach Anspruch 6, wobei die Befehlsantwort eine Eigenschaft umfasst, die die Verfallsinformationen des Betriebsmittels umfasst, und ein Wert der Eigenschaft die Verfallsinformationen des Betriebsmittels ist.

8. Verfahren zum Bereitstellen von Verfallsinformationen eines Betriebsmittels nach Anspruch 1, wobei die Befehlsanforderung einen "AuditValue"-Befehl umfasst und der "AuditValue"-Befehl dafür ausgelegt ist, eine Eigenschaft der Verfallsinformationen des Betriebsmittels und entsprechende Identifikationsinformationen des Betriebsmittels zu auditieren.

9. Verfahren zum Bereitstellen von Verfallsinformationen eines Betriebsmittels nach Anspruch 8, wobei die Befehlsantwort eine Eigenschaft der Verfallsinformationen des Betriebsmittels und Identifikationsinformationen des Betriebsmittels umfasst, ein Wert der Eigenschaft die Verfallsinformationen des Betriebsmittels ist und die Identifikationsinformationen dafür ausgelegt sind, das Betriebsmittel zu identifizieren.

10. Verfahren zum Bereitstellen von Verfallsinformationen eines Betriebsmittels nach einem der Ansprüche 1 bis 9, wobei
die Verfallsinformationen des Betriebsmittels ein Datum und eine Uhrzeit umfassen.

11. "Media Gateway", umfassend:
eine Anforderungsinformations-Empfangseinheit (401), die dafür ausgelegt ist, eine Befehlsanforderung von einem "Media Gateway Controller" zu empfangen, wobei die Befehlsanforderung eine Angabe zum Anfordern, Verfallsinformationen eines Betriebsmittels zu beschaffen, führt; und
eine Verfallsinformations-Sendeeinheit (402), die dafür ausgelegt ist, eine Befehlsantwort, die der Befehlsanforderung entspricht, zu dem "Media Gateway Controller" zu senden, wobei die Befehlsantwort die Verfallsinformationen des Betriebsmittels umfasst und zu dem "Media Gateway Controller" gesendet wird.

12. "Media Gateway" nach Anspruch 11, wobei
die durch die Anforderungsinformations-Empfangseinheit (401) empfangene Befehlsanforderung ferner Identifikationsinformationen des Betriebsmittels umfasst; und
die durch die Verfallsinformations-Sendeeinheit (402) gesendete Befehlsantwort die Verfallsinformationen des Betriebsmittels umfasst, das mit den Identifikationsinformationen assoziiert ist.

13. "Media Gateway" nach Anspruch 11, wobei
die durch die Anforderungsinformations-Empfangseinheit (401) empfangene Befehlsanforderung nicht Identifikationsinformationen des Betriebsmittels umfasst; und
die durch die Verfallsinformations-Sendeeinheit (402) gesendete Befehlsantwort die Verfallsinformationen des Betriebsmittels umfasst, das die Verfallsinformationen mit einem Datum und einer Uhrzeit aufweist, die in allen Betriebsmitteln am frühestem zu erreichen sind.

14. Die Verfallsinformationen des Betriebsmittels sendendes "Media Gateway" nach Anspruch 11, wobei
die durch die Anforderungsinformations-Empfangseinheit (401) empfangene Befehlsanforderung nicht Identifikationsinformationen des Betriebsmittels umfasst; und
die Verfallsinformations-Sendeeinheit (402) ferner dafür ausgelegt ist, Fehlerinformationen an den "Media Gateway Controller" zurückzugeben.

15. Verfahren zum Beschaffen von Verfallsinformationen eines Betriebsmittels, umfassend:
Senden einer Befehlsanforderung durch einen "Media Gateway Controller" zu einem "Media Gateway", wobei die Befehlsanforderung eine Angabe zum Anfordern, die Verfallsinformationen des Betriebsmittels zu beschaffen, führt; und
Empfangen einer Befehlsantwort, die der durch das "Media Gateway" gesendeten Befehlsanforderung entspricht, in dem "Media Gateway Controller", wobei die Befehlsantwort die Verfallsinformationen des Betriebsmittels führt.

16. "Media Gateway Controller", umfassend:
eine Anforderungsinformations-Sendeeinheit (501), die dafür ausgelegt ist, eine Befehlsanforderung zu einem "Media Gateway" zu senden, wobei die Befehlsanforderung eine Angabe zum Anfordern, Verfallsinformationen eines Betriebsmittels zu beschaffen, führt, und
eine Verfallsinformations-Empfangseinheit (502), die dafür ausgelegt ist, eine Befehlsantwort, die der Befehlsanforderung entspricht, von dem "Media Gateway" zu empfangen, wobei die Befehlsantwort die Verfallsinformationen des Betriebsmittels führt.

## Revendications

1. Procédé de fourniture d'informations d'expiration d'une ressource, comprenant :
la réception, au niveau d'une passerelle multimédia, d'une demande de commande envoyée par une unité de commande de passerelle multimédia, la demande de commande acheminant une indication pour demander d'acquérir les informations d'expiration de la ressource ; et
l'envoi, par la passerelle multimédia, des informations d'expiration de la ressource à l'unité de commande de passerelle multimédia dans une réponse à la commande correspondant à la demande de commande.

2. Procédé de fourniture d'informations d'expiration d'une ressource selon la revendication 1, dans lequel
la ressource est une terminaison ou un flux.

3. Procédé de fourniture d'informations d'expiration d'une ressource selon la revendication 1, dans lequel,
si la demande de commande comprend des informations d'identification de la ressource, l'envoi des informations d'expiration de la ressource à l'unité de commande de passerelle multimédia comprend :
l'envoi à l'unité de commande de passerelle multimédia des informations d'expiration de la ressource associée aux informations d'identification.

4. Procédé de fourniture d'informations d'expiration d'une ressource selon la revendication 1, dans lequel,
si la demande de commande ne comprend pas d'informations d'identification de la ressource, l'envoi des informations d'expiration de la ressource à l'unité de commande de passerelle multimédia comprend :
l'envoi à l'unité de commande de passerelle multimédia des informations d'expiration de la ressource dont les informations d'expiration ont une date et une heure devant être atteintes le plus tôt parmi toutes les ressources.

5. Procédé de fourniture d'informations d'expiration d'une ressource selon la revendication 1, dans lequel, si la demande de commande ne comprend pas d'informations d'identification de la ressource, le procédé comprend en outre :
le renvoi d'informations d'erreur correspondantes à l'unité de commande de passerelle multimédia.

6. Procédé de fourniture d'informations d'expiration d'une ressource selon la revendication 1, dans lequel la demande de commande comprend une commande d'Ajout, une commande de Modification ou une commande de Déplacement, la commande d'Ajout, la commande de Modification ou la commande de Déplacement comprenant une propriété représentant les informations d'expiration de la ressource, une valeur de la propriété étant un élément générique représentant "choisir", et la propriété indiquant la demande des informations d'expiration de la ressource.

7. Procédé de fourniture d'informations d'expiration d'une ressource selon la revendication 6, dans lequel la réponse à la commande comprend une propriété représentant les informations d'expiration de la ressource et une valeur de la propriété est constituée par les informations d'expiration de la ressource.

8. Procédé de fourniture d'informations d'expiration d'une ressource selon la revendication 1, dans lequel la demande de commande comprend une commande AuditValue (Valeur d'Audit), et la commande AuditValue est apte à effectuer un audit d'une propriété des informations d'expiration de la ressource et d'informations d'identification correspondantes de la ressource.

9. Procédé de fourniture d'informations d'expiration d'une ressource selon la revendication 8, dans lequel la réponse à la commande comprend une propriété des informations d'expiration de la ressource et des informations d'identification de la ressource, une valeur de la propriété est constituée par les informations d'expiration de la ressource, et les informations d'identification sont aptes à identifier la ressource.

10. Procédé de fourniture d'informations d'expiration d'une ressource selon l'une quelconque des revendications 1 à 9, dans lequel
les informations d'expiration de la ressource comprennent une date et une heure.

11. Passerelle multimédia, comprenant :
une unité de réception d'informations de demande (401), apte à recevoir une demande de commande d'une unité de commande de passerelle multimédia, la demande de commande acheminant une indication pour demander d'acquérir des informations d'expiration d'une ressource ; et
une unité d'envoi d'informations d'expiration (402), apte à envoyer une réponse à la commande correspondant à la demande de commande à l'unité de commande de passerelle multimédia, la réponse à la commande comprenant les informations d'expiration de la ressource et étant envoyée à l'unité de commande de passerelle multimédia.

12. Passerelle multimédia selon la revendication 11, dans laquelle la demande de commande reçue par l'unité de réception d'informations de demande (401) comprend en outre des informations d'identification de la ressource ; et
la réponse à la commande envoyée par l'unité d'envoi d'informations d'expiration (402) comprend les informations d'expiration de la ressource associée aux informations d'identification.

13. Passerelle multimédia selon la revendication 11, dans laquelle la demande de commande reçue par l'unité de réception d'informations de demande (401) ne comprend pas d'informations d'identification de la ressource ; et
la réponse à la commande envoyée par l'unité d'envoi d'informations d'expiration (402) comprend les informations d'expiration de la ressource dont les informations d'expiration ont une date et une heure devant être atteintes le plus tôt parmi toutes les ressources.

14. Passerelle multimédia envoyant les informations d'expiration de la ressource selon la revendication 11, dans laquelle
la demande de commande reçue par l'unité de réception d'informations de demande (401) ne comprend pas d'informations d'identification de la ressource ; et
l'unité d'envoi d'informations d'expiration (402) est en outre apte à renvoyer les informations d'erreurs correspondantes à l'unité de commande de passerelle multimédia.

15. Procédé d'acquisition d'informations d'expiration d'une ressource, comprenant :
l'envoi, par une unité de commande de passerelle multimédia, d'une demande de commande à une passerelle multimédia, la demande de commande acheminant une indication pour demander d'acquérir les informations d'expiration de la ressource ; et
la réception, au niveau de l'unité de commande de passerelle multimédia, d'une réponse à la commande correspondant à la demande de commande envoyée par la passerelle multimédia, la réponse à la commande acheminant les informations d'expiration de la ressource.

16. Unité de commande de passerelle multimédia, comprenant :
une unité d'envoi d'informations de demande (501), apte à envoyer une demande de commande à une passerelle multimédia, la demande de commande acheminant une indication pour demander d'acquérir des informations d'expiration d'une ressource ; et
une unité de réception d'informations d'expiration (502), apte à recevoir une réponse à la commande correspondant à la demande de commande en provenance de la passerelle multimédia, la réponse à la commande acheminant les informations d'expiration de la ressource.
